# EUROPÄISCHE PATENTSCHRIFT

(11) **EP 3 640 522 B1**
(45) Veröffentlichungstag und Bekanntmachung des Hinweises auf die Patenterteilung: **04.01.2023**
(21) Anmeldenummer: 18200995.1
(22) Anmeldetag: 17.10.2018
(51) Int. Cl.: F16P 3/14

(54) **ÜBERWACHUNGSVORRICHTUNG**
MONITORING DEVICE
DISPOSITIF DE SURVEILLANCE

(43) Veröffentlichungstag der Anmeldung: 22.04.2020
(73) Patentinhaber: Leuze electronic GmbH + Co. KG, 73277 Owen/Teck (DE)
(72) Erfinder: Brunner, Rolf, 82223 Eichenau (DE)
(74) Vertreter: Ruckh, Rainer Gerhard

(56) Entgegenhaltungen:
- WO-A1-2016/139147

## Beschreibung

Die Erfindung betrifft eine Überwachungsvorrichtung.

Derartige Überwachungsvorrichtungen werden insbesondere zur Gefahrenbereichsüberwachung an gefahrbringenden Anlagen eingesetzt. Ein Gefahrenbereich an einer solchen Anlage wird mit einem optischen Sensor überwacht, der allgemein als scannender Sensor derart ausgebildet ist, dass mit den Lichtstrahlen einer Sende-/Empfangseinheit dieses optischen Sensors periodisch ein Überwachungsbereich abgetastet wird. Insbesondere kann der optische Sensor als Flächendistanzsensor, das heißt scannender Distanzsensor ausgebildet sein, mit welchem Positionen von Objekten im Überwachungsbereich bestimmt werden können.

Bei bekannten Überwachungsvorrichtungen werden scannende optische Sensoren derart eingesetzt, dass mit diesen eine Objektüberwachung nicht im gesamten Überwachungsbereich sondern nur innerhalb eines vorgegebenen Schutzfelds erfolgt. Das Schutzfeld ist als Parameter im optischen Sensor gespeichert, wobei deren Dimension an den zu überwachenden Gefahrenbereich bestmöglich angepasst wird.

Die Auswertung der mit dem optischen Sensor generierten Messdaten erfolgt im optischen Sensor. Hierzu ist im optischen Sensor eine Auswerteeinheit integriert, die die am Ausgang eines Empfängers der Sende-/Empfangseinheit anstehenden Empfangssignale auswertet. Dabei wird ein binäres Objektfeststellungsignal generiert, dessen Schaltzustände angeben, ob sich innerhalb des Schutzfeldes ein Objekt befindet.

Dieses Objektfeststellungsignal wird an eine Steuerung ausgegeben, die die Anlage steuert. Wird ein Objektfeststellungsignal ausgegeben, das signalisiert, dass kein Objekt im Schutzfeld vorhanden ist, wird der Betrieb der Anlage frei gegeben. Generiert der optische Sensor ein Objektfeststellungsignal mit dem Schaltzustand, der einer Objektdetektion im Schutzfeld entspricht, wird durch dieses Objektfeststellungsignal die Anlage mittels der Steuerung stillgesetzt, um Gefahrenzustände zu vermeiden.

Abhängig von der jeweiligen Applikation oder auch abhängig vom Betriebszustand der Anlage kann es erforderlich sein, die Gefahrenbereichsüberwachung anzupassen. Dies wird dadurch erreicht, dass im optischen Sensor unterschiedliche Schutzfelder abgespeichert sind, wobei je nach Anforderung das am besten geeignete Schutzfeld aktiviert wird.

Nachteilig hierbei ist, dass mit der begrenzten Anzahl an Schutzfeldern keine ausreichende Anpassung an sich ändernde Randbedingungen der Gefahrenbereichsüberwachung möglich ist.

Weiterhin nachteilig ist, dass einerseits ein hoher Aufwand erforderlich ist, geeignete Schutzfelder im optischen Sensor zu hinterlegen. Weiterhin ist auch ein unerwünscht hoher Aufwand erforderlich, um im Bedarfsfall geeignete Schutzfelder auszuwählen und zu aktivieren.

Die WO 2016/139147 A1 betrifft ein Sicherheitskontrollsystem mit einem Sicherheitssensor, der als optischer Sensor in Form eines Scanners ausgebildet sein kann. In einer Auswerteeinheit ist wenigstens ein Schutzfeld vorgegeben, innerhalb dessen mit dem Sicherheitssensor eine Objekterfassung durchgeführt wird. Für eine Überwachung sicherheitskritischer Maschinen können zwei unterschiedliche Schutzfelder definiert werden.

Der Erfindung liegt die Aufgabe zugrunde, eine Überwachungsvorrichtung mit erhöhter Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Überwachungsvorrichtung mit einem optischen Sensor, welcher eine Sende-/Empfangseinheit mit wenigstens einem Lichtstrahlen emittierenden Sender und wenigstens einem Lichtstrahlen empfangenden Empfänger aufweist, wobei die Lichtstrahlen innerhalb eines Überwachungsbereichs geführt sind, und mit einer Auswerteeinheit, in welcher wenigstens ein Schutzfeld vorgegeben ist. In der Auswerteeinheit werden in Abhängigkeit von Empfangssignalen des Empfängers Objekte innerhalb des Schutzfeldes erfasst. In den optischen Sensor ist ein externes Triggersignal einlesbar, wodurch in der Auswerteeinheit in Abhängigkeit wenigstens einer mit der Sende-/Empfangseinheit erfassten Umgebungskontur ein Schutzfeld generiert wird. Der Überwachungsbereich umfasst einen vorgegebenen Winkelbereich, der in eine Anzahl von Winkelsegmenten unterteilt ist. Innerhalb jedes Winkelsegments wird wenigstens ein Distanzwert ermittelt.

Der Grundgedanke der Erfindung besteht darin, dass im optischen Sensor ein Schutzfeld selbsttätig generiert wird, wenn ein externes Triggersignal eingelesen wird. Die Generierung des Schutzfeldes erfolgt dabei aus den von dem optischen Sensor generierten Messwerten, nämlich in Form einer oder mehreren von der Sende-/Empfangseinheit erfassten Umgebungskonturen, die bei der Abtastung des Überwachungsbereichs erhalten werden.

Eine umständliche manuelle Vergabe von Schutzfeldern durch Eingabe von Parametern oder durch Durchführung umständlicher Einlernvorgänge mit Testkörpern oder Probekörpern entfällt somit.

Weiterhin wird eine erhöhte Flexibilität der Schutzfeld-Überwachung dadurch erreicht, dass externe Triggersignale beliebig oft und in beliebigen Zeitabfolgen generiert und in den optischen Sensor eingelesen werden. Damit können beliebig oft und beliebig verschiedene Schutzfelder für eine Objektdetektion generiert werden.

Dies stellt gegenüber bekannten Überwachungsvorrichtungen eine erhebliche Erhöhung der Funktionalität dar, da bei derartigen bekannten Überwachungsvorrichtungen im optischen Sensor nur eine begrenzte Anzahl von Schutzfeldern abgespeichert ist und demzufolge nur eine beschränkte Auswahl zwischen diesen Schutzfeldern möglich ist.

Die externen Triggersignale werden generell von einer externen Einheit generiert, wobei diese abhängig von den jeweiligen Applikationsbedingungen generiert werden.

Die Überwachungsvorrichtung wird besonders vorteilhaft im Bereich der Sicherheitstechnik, insbesondere im Bereich des Personenschutzes eingesetzt.

Insbesondere wird mit der Überwachungsvorrichtung eine gefahrbringende Anlage überwacht, wobei ein Gefahrenbereich der Anlage mit dem optischen Sensor überwacht wird. Eine Sicherheitssteuerung dient allgemein zur Steuerung der Anlage, wobei der Begriff Anlage generell auch Maschinen aller Art oder auch Fahrzeuge umfasst.

Vorteilhaft werden die externen Triggersignale für den optischen Sensor in dieser Sicherheitssteuerung generiert.

Hierbei wird der Umstand ausgenutzt, dass die Sicherheitssteuerung die zentrale Steuerungsfunktion der Anlage übernimmt, wobei sämtliche hierfür benötigten Informationen in der Sicherheitssteuerung vorhanden sind.

Abhängig hiervon kann die Sicherheitssteuerung externe Triggersignale vorgeben, damit im optischen Sensor an die jeweiligen Anforderungen passende Schutzfelder generiert werden.

Vorteilhaft ist der optische Sensor ein Sicherheitssensor, welcher eine sichere Schnittstelle zum Einlesen des externen Triggersignals aufweist.

Der Sicherheitssensor zeichnet sich generell durch einen fehlersicheren Aufbau aus. Insbesondere weist der optische Sensor eine sichere Schnittstelle zur fehlersicheren Ein- und Ausgabe von Signalen auf. Die sichere Schnittstelle kann eine zweikanalige fehlersichere Ein-/Ausgangsstruktur aufweisen. Weiterhin kann die sichere Schnittstelle als Feldbusschnittstelle ausgebildet sein.

Über diese sichere Schnittstelle erfolgt einerseits das Einlesen der externen Triggersignale. Weiterhin können vom optischen Sensor bei der Schutzfeld-Überwachung generierte Ausgangssignale über die sichere Schnittstelle ausgegeben werden.

Vorteilhaft werden in dem optischen Sensor binäre Objektfeststellungsignale generiert, deren Schaltzustände angeben, ob sich ein Objekt im Überwachungsbereich befindet oder nicht.

Gemäß einer weiteren Ausgestaltung können auch Objektfeststellungsignale generiert werden, welche in Form von Positionen, Geschwindigkeiten und/oder Bewegungsrichtungen von Objekten innerhalb des jeweiligen Schutzfeldes ausgebildet sind.

Bei sicherheitstechnischen Anwendungen für eine Gefahrenbereichsüberwachung an einer Anlage kann die Sicherheitssteuerung diese Objektfeststellungsignale zur Steuerung der Anlage verwenden, insbesondere derart, dass die Sicherheitssteuerung die Anlage stillsetzt, wenn das Objektfeststellungsignal den Schaltzustand einnimmt, dass ein Objekt im Schutzfeld vorhanden ist.

Gemäß einer vorteilhaften Ausgestaltung der Erfindung ist der optische Sensor ein Flächendistanzsensor. Mit dem optischen Sensor werden Distanzwerte abhängig von der aktuellen Strahlrichtung der Lichtstrahlen generiert.

Insbesondere ist die Sende-/Empfangseinheit des optischen Sensors in einem rotierenden Messkopf integriert oder die Lichtstrahlen der stationär angeordneten Sende-/Empfangseinheit sind über eine rotierende Ablenkeinheit als Bestandteil des optischen Sensors geführt, wodurch die Lichtstrahlen periodisch innerhalb des Überwachungsbereichs geführt sind.

In diesem Fall umfasst der Überwachungsbereich einen vorgegebenen Winkelbereich, der in eine Anzahl von Winkelsegmenten unterteilt ist. Innerhalb jedes Winkelsegments wird wenigstens ein Distanzwert ermittelt.

Gemäß einer ersten Variante bilden für Umgebungskonturen, die zur Generierung eines Schutzfeldes herangezogen werden, Distanzwerte in den einzelnen Winkelsegmenten die Grenzen des Schutzfeldes.

Dies stellt eine besonders einfache Variante der Generierung eines Schutzfeldes dar, da in diesem Fall die Umgebungskonturen, mit dem optischen Sensor generiert werden, das heißt unverändert als Schutzfeld übernommen werden.

Gemäß einer zweiten Variante werden für Umgebungskonturen, die zur Generierung eines Schutzfeldes herangezogen werden, Distanzwerte in den einzelnen Winkelsegmenten zur Definition von Schutzfeld-Grenzen mit Offsetwerten verrechnet.

Diese Art der Generierung ist dann zweckmäßig, wenn mit ermittelten Umgebungskonturen statische Objekte erfasst werden, die aus dem Schutzfeld ausgeblendet werden sollen. Dies wird besonders einfach dadurch erreicht, dass für jedes Winkelsegment nicht der aktuell ermittelte Distanzwert als Schutzfeld-Grenze übernommen wird, sondern ein um einen Offsetwert reduzierter Distanzwert. Dieser Offsetwert kann eine Konstante sein oder eine durch eine Rechenoperation für ein Winkelsegment individuell bestimmter Wert.

Gemäß einer ersten vorteilhaften Ausgestaltung der Erfindung wird bei Registrieren des externen Triggersignals aus der aktuell ermittelten Umgebungskontur ein Schutzfeld generiert.

In diesem Fall wird ein Schutzfeld aus der Umgebungskontur generiert, die unmittelbar nach Einlesen des externen Triggersignals erhalten wird. Das Schutzfeld wird damit sehr schnell generiert und kann sofort für eine Schutzfeld-Überwachung genutzt werden.

Gemäß einer zweiten vorteilhaften Ausgestaltung der Erfindung wird bei Registrieren des externen Triggersignals ein Zeitintervall gestartet, wobei innerhalb des Zeitintervalls ermittelte Umgebungskonturen zur Generierung eines Schutzfeldes herangezogen werden.

Zweckmäßig werden innerhalb des Zeitintervalls für jedes Winkelsegment des Überwachungsbereichs fortlaufend Distanzwerte ermittelt. Nach Ablauf des Zeitintervalls wird für jedes Winkelsegment der kleinste Distanzwert zur Generierung des Schutzfeldes herangezogen.

In diesem Fall werden zur Generierung mehrere Umgebungskonturen, die innerhalb des Zeitintervalls generiert werden, zur Definition des Schutzfeldes herangezogen. Dadurch, dass für jedes Winkelsegment jeweils der kleinste Distanzwert zur Definition einer Schutzfeld-Grenze herangezogen wird, ist gewährleistet, dass keine statischen Objekte in das Schutzfeld ragen und die nachfolgende Objektdetektion im Schutzfeld erschweren oder vortäuschen.

Bei dieser Variante kann eine Bedienperson auch eine Schutzfeld-Grenze einfach und individuell dadurch bestimmen, dass sie, vorzugsweise mit einem definierten Objekt, das vom optischen Sensor erfasst wird, die gewünschte Schutzfeld-Grenze während des Zeitintervalls abschreitet.

Generell kann ein Schutzfeld, das auf das Einlesen eines externen Triggersignals im optischen Sensor erzeugt wurde, sofort für eine Schutzfeld-Überwachung verwendet werden.

Alternativ kann ein so generiertes Schutzfeld zunächst, vorzugsweise unter einer bestimmten Nummer, in der Auswerteeinheit gespeichert werden. Dann kann das Schutzfeld zu einem frei wählbaren späteren Zeitpunkt ausgelesen und für eine Schutzfeld-Überwachung aktiviert werden.

Gemäß einer vorteilhaften Weiterbildung ist zur Definition von Schutzfeld-Grenzen in der Auswerteeinheit ein maximaler Schutzfeld-Radius vorgegeben.

Durch die Vorgabe des maximalen Schutzfeld-Radius wird eine maximale Schutzfeld-Größe vorgegeben. Hierzu werden für alle Umgebungskonturen, die zur Generierung eines Schutzfeldes herangezogen werden, die Distanzwerte in allen Winkelsegmenten mit dem maximalen Schutzfeld-Radius verglichen. Sind diese Distanzwerte größer als der maximale Schutzfeld-Radius, wird für das jeweilige Winkelsegment der maximale Schutzfeld-Radius als Schutzfeld-Grenze übernommen.

Gemäß einer weiteren vorteilhaften Weiterbildung sind zur Definition von Schutzfeld-Grenzen Positionen wenigstens einer Gefahrenquelle in der Auswerteeinheit vorgegeben.

Eine solche Gefahrenquelle kann von einem gefahrbringenden Bereich einer Anlage gebildet sein. Durch die Vorgabe der Position einer solchen Gefahrenquelle kann die Dimensionierung des Schutzfeldes genau an diese Gefahrenquelle angepasst werden.

Gemäß einer vorteilhaften Ausgestaltung wird zusätzlich zu wenigstens einem Schutzfeld wenigstens ein Warnfeld bei Einlesen eines externen Triggersignals in den optischen Sensor generiert.

Ein solches Warnfeld kann beispielsweise einem Schutzfeld angelagert sein, um rechtzeitig zu erkennen, ob sich gefahrbringende Objekte dem Schutzfeld nähern. Hierzu wird vorteilhaft die Position, Geschwindigkeit und/oder Bewegungsrichtung von Objekten im Warnfeld ermittelt. Abhängig von der Detektion von Objekten im Warnfeld kann beispielsweise der Betrieb einer Anlage gebremst werden.

Die Generierung eines Warnfeldes erfolgt analog zur Generierung eines Schutzfeldes.

Vorteilhaft ist eine Eingabeeinheit vorgesehen, über welche vorgebbar ist, ob ein Schutzfeld ein Warnfeld generiert wird.

Alternativ gibt die Sicherheitssteuerung der Anlage über die sichere Schnittstelle vor, ob ein Schutzfeld oder ein Warnfeld generiert werden soll.

Eine Bedienperson kann somit einfach vorgeben, ob auf ein externes Triggersignal ein Schutzfeld oder ein Warnfeld generiert wird.

Die Erfindung wird im Folgenden anhand der Zeichnungen erläutert. Es zeigen:
- Figur 1:: Schematische Darstellung eines Ausführungsbeispiels der erfindungsgemäßen Überwachungsvorrichtung.
- Figur 2:: Erstes Ausführungsbeispiel eines optischen Sensors für die Überwachungsvorrichtung gemäß Figur 1.
- Figur 3:: Zweites Ausführungsbeispiel eines optischen Sensors für die Überwachungsvorrichtung gemäß Figur 1.
- Figur 4:: Erstes Ausführungsbeispiel zur Generierung eines Schutzfeldes für die Überwachungsvorrichtung gemäß Figur 1.
- Figur 5:: Zweites Ausführungsbeispiel zur Generierung eines Schutzfeldes für die Überwachungsvorrichtung gemäß Figur 1.
- Figur 6:: Anordnung mit einem optischen Sensor, welchem ein Schutzfeld und ein Warnfeld zugeordnet ist.

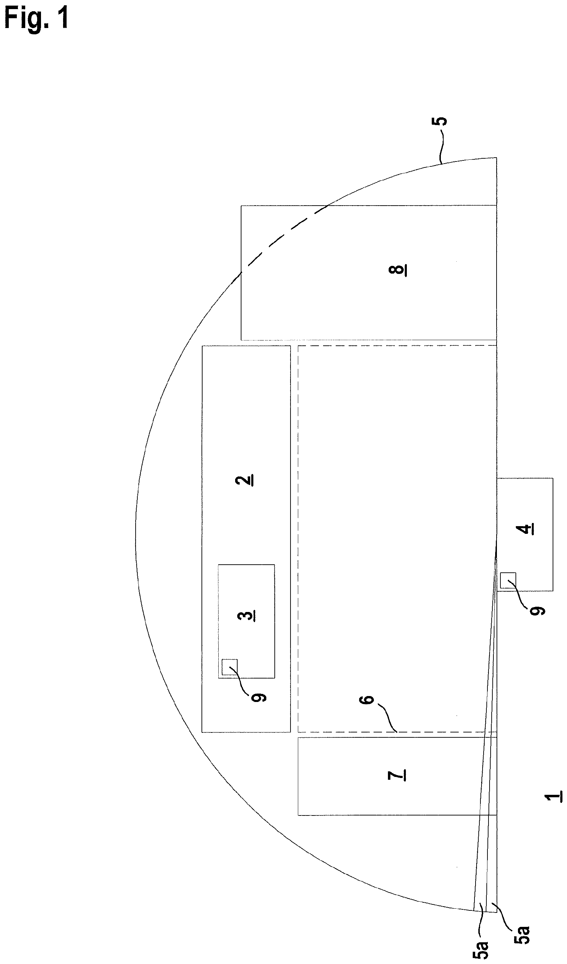

Figur 1 zeigt schematisch ein Ausführungsbeispiel der erfindungsgemäßen Überwachungsvorrichtung 1. Die Überwachungsvorrichtung 1 wird im vorliegenden Fall im Bereich der Sicherheitstechnik eingesetzt. Dabei wird ein Gefahrenbereich im Vorfeld einer Anlage 2 überwacht. Die Anlage 2 wird mit einer Sicherheitssteuerung 3 gesteuert. Zur Erfüllung der sicherheitstechnischen Anforderungen weist die Sicherheitssteuerung 3 einen fehlersicheren Aufbau auf.

Zur Überwachung des Gefahrenbereichs weist die Überwachungsvorrichtung 1 einen optischen Sensor 4 auf, mit dem ein Überwachungsbereich 5 überwacht werden kann. Vorteilhaft bildet auch der optische Sensor 4 einen Sicherheitssensor. Entsprechend der maximalen Reichweite des optischen Sensors 4 wird mit diesem im vorliegenden Fall ein ebener, halbkreisförmiger Überwachungsbereich 5 überwacht. Der optische Sensor 4 ist so positioniert, dass dieser Überwachungsbereich 5 die Anlage 2 mit dem Gefahrenbereich überwacht.

Mit dem optischen Sensor 4 erfolgt eine Objektüberwachung innerhalb eines vorgegebenen Schutzfeldes 6. Je nach Anlagenbetrieb kann sich der zu überwachende Gefahrenbereich an der Anlage 2 ändern. Um eine Anpassung an sich ändernde Gefahrenbereiche zu gewährleisten können im optischen Sensor 4 unterschiedliche Schutzfelder 6 aktiviert sein, wobei in Figur 1 nur ein Schutzfeld 6 dargestellt ist.

Wie Figur 1 weiter zeigt, liegen (zumindest teilweise) im Überwachungsbereich 5 auch weitere Gegenstände 7, 8 wie Fertigungseinrichtungen, Regale, Fördereinheiten oder dergleichen. Generell gehen von diesen Gegenständen 7, 8 keine Gefahren aus. Daher sind die Schutzfelder 6 so dimensioniert, dass diese Gegenstände 7, 8 außerhalb der Schutzfelder 6 liegen.

Der optische Sensor 4 und die Sicherheitssteuerung 3 ergänzen sich zur Überwachungsvorrichtung 1. Zwischen diesen Einheiten erfolgt ein fehlersicherer Austausch von Daten. Zur Durchführung des Datenaustausches weist der optische Sensor 4 wie auch die Sicherheitssteuerung 3 eine sichere Schnittstelle 9 auf. Diese Schnittstelle 9 kann von einer fehlersicheren, zweikanaligen Ein-/Ausgangsstruktur gebildet sein. Weiterhin kann die Schnittstelle 9 von einer sicheren Feldbusschnittstelle gebildet sein. Das sichere Feldbussystem kann zum Beispiel als PROFIsafe-System ausgebildet sein.

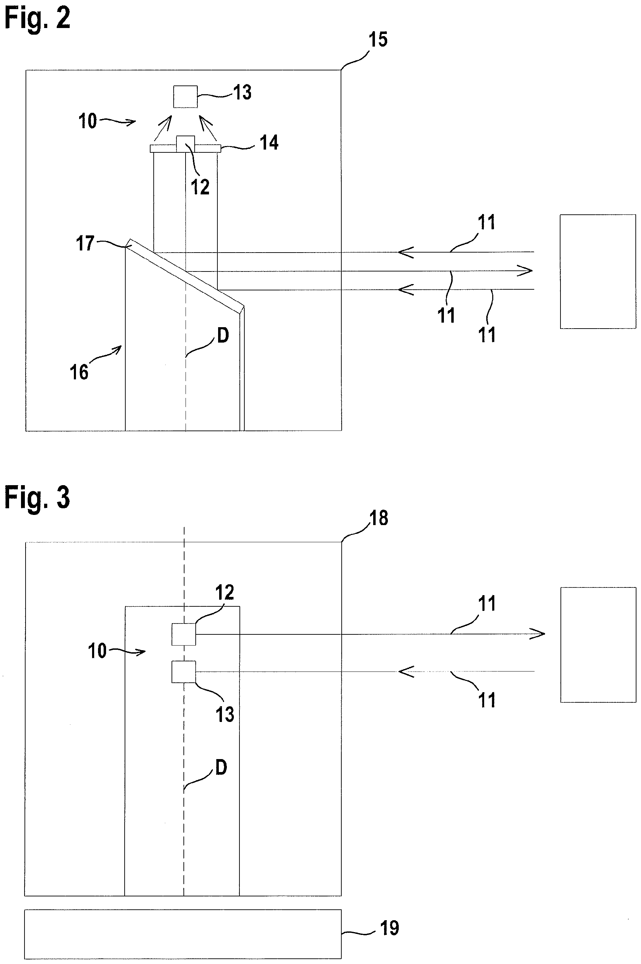

Figur 2 zeigt ein erstes Ausführungsbeispiel des optischen Sensors 4. Der optische Sensor 4 weist eine Sende-/Empfangseinheit 10 mit einem Lichtstrahlen 11 emittierenden Sender 12 und einem Lichtstrahlen 11 empfangenden Empfänger 13 auf. Der Sender 12 ist zum Beispiel von einer Laserdiode gebildet, der Empfänger 13 ist zum Beispiel von einer Photodiode gebildet. Dem Empfänger 13 ist eine Empfangsoptik 14 zugeordnet. Die Sende-/Empfangseinheit 10 ist stationär in einem Gehäuse 15 integriert.

Ebenfalls im Gehäuse 15 ist eine Ablenkeinheit 16 vorgesehen, die einen motorisch getriebenen, um eine Drehachse D drehbaren Umlenkspiegel 17 aufweist. Die vom Sender 12 emittierten Lichtstrahlen 11 und die von einem zu detektierenden Objekt zurückreflektierten Lichtstrahlen 11 werden über den Umlenkspiegel 17 geführt. Durch die Drehbewegung des Umlenkspiegels 17 werden die Lichtstrahlen 11 periodisch im Überwachungsbereich 5 geführt. Mittels eines Winkelgebers wird die aktuelle Drehstellung des Umlenkspiegels 17 und somit die aktuelle Strahlenrichtung der Lichtstrahlen 11 erfasst.

Vorzugsweise ist der Überwachungsbereich 5 in eine Anzahl von Winkelsegmenten 5a unterteilt, wobei in jedem Winkelsegment 5a ein Distanzwert generiert wird. Diese Winkelsegmente 5a sind schematisch in Figur 1 angedeutet.

Im vorliegenden Fall bildet die Sende-/Empfangseinheit 10 einen nach einem Puls-Laufzeit-Verfahren arbeitenden Distanzsensor. Der optische Sensor 4 bildet somit einen Flächendistanzsensor.

In diesem Fall werden vom optischen Sensor 4 als Messwerte die aktuellen Distanzwerte mit den aktuellen Strahlenrichtungen der Lichtstrahlen 11 an die Sicherheitssteuerung 3 ausgegeben.

Generell weist der optische Sensor 4 eine (nicht dargestellte) Auswerteeinheit auf, in welcher in Abhängigkeit der Empfangssignale des Empfängers 13 ein Objektfeststellungsignal generiert wird, welches über die Schnittstelle 9 an die Sicherheitssteuerung 3 ausgegeben wird.

Figur 3 zeigt eine zweite Ausführungsform des optischen Sensors 4. In diesem Fall ist eine Sende-/Empfangseinheit 10 mit einem Lichtstrahlen 11 emittierenden Sender 12 und einem Lichtstrahlen 11 empfangenden Empfänger 13 in einem rotierenden Messkopf 18 angeordnet. Der um eine Drehachse D drehbare, und auf einem feststehenden Sockel 19 gelagerte Messkopf 18 bewirkt in diesem Fall die periodische Ablenkung der Lichtstrahlen 11 im Überwachungsbereich 5. Ansonsten entspricht der optische Sensor 4 gemäß Figur 3 der Ausführungsform gemäß Figur 2.

Im vorliegenden Fall ist der optische Sensor 4 als Sicherheitssensor ausgebildet und weist einen fehlersicheren Aufbau auf. Insbesondere ist die Auswerteeinheit redundant aufgebaut, beispielsweise in Form zweier sich gegenseitig zyklisch überwachenden Rechnereinheiten.

Im vorliegenden Fall werden im optischen Sensor 4 Objektfeststellungsignale in Form binärer Schaltsignale generiert, deren Schaltzustände angeben ob sich ein Objekt im Schutzfeld 6 befindet oder nicht.

Diese Schaltsignale werden vom optischen Sensor 4 über die sichere Schnittstelle 9 zur Sicherheitssteuerung 3 übertragen. Dort können sie direkt zur Steuerung der Anlage 2 genutzt werden. Insbesondere wird die Anlage 2 stillgesetzt, wenn mit einem Schaltsignal ein Objekteingriff im Schutzfeld 6 gemeldet wird.

Erfindungsgemäß wird im optischen Sensor 4 ein Schutzfeld 6 dann generiert, wenn in diesem über die Schnittstelle 9 ein externes Triggersignal von einer externen Einheit eingelesen wird, welche im vorliegenden Fall von der Sicherheitssteuerung 3 gebildet ist.

Dieses Schutzfeld 6 wird aus der oder den aktuellen Umgebungskonturen generiert, die mit dem optischen Sensor 4 bei der Abtastung des Überwachungsbereichs 5 nach Einlesen des externen Triggersignals erhalten werden.

Im einfachsten Fall wird das Schutzfeld 6 aus nur einer Umgebungskontur abgeleitet, welches unmittelbar nach Einlesen des externen Triggersignals ermittelt wird.

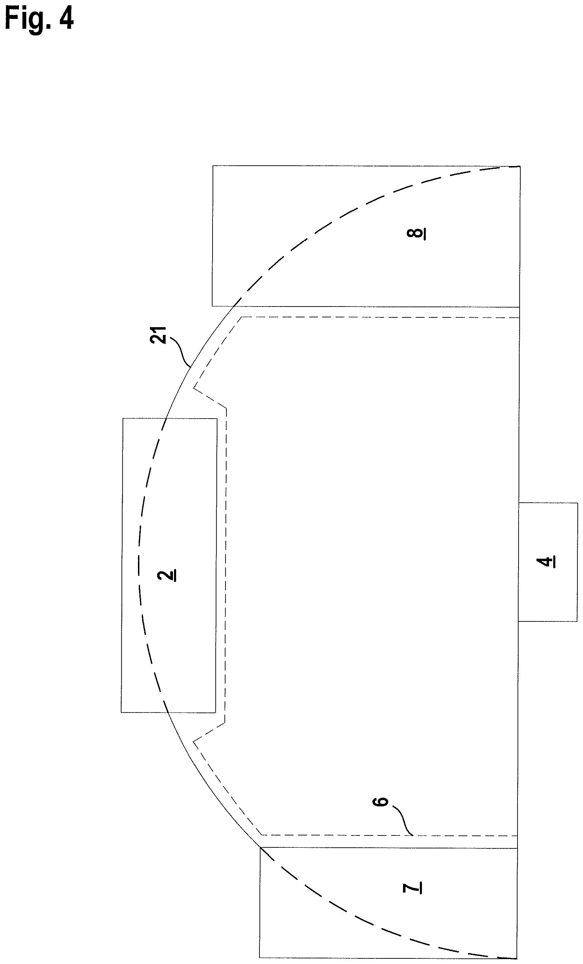

Ein Beispiel hierfür ist in Figur 4 dargestellt.

Figur 4 zeigt den optischen Sensor 4 als Bestandteil der Überwachungsvorrichtung 1, wobei im Umfeld des optischen Sensors 4 die Anlage 2 als Gefahrenquelle und stationäre Gegenstände 7, 8 angeordnet sind.

Bei Einlesen des externen Triggersignals wird aus der ermittelten Umgebungskontur ein Schutzfeld 6 generiert. Wie Figur 4 zeigt, ist im optischen Sensor 4 ein maximaler Schutzfeld-Radius 21 vorgegeben, welcher die maximale Schutzfeld-Größe vorgibt. Weiterhin sind im optischen Sensor 4 die Positionen der Anlage 2 oder Gefahrenquelle vorgegeben. Im vorliegenden Beispiel soll die Gefahrenquelle an der dem optischen Sensor 4 zugewandten Seite der Anlage 2 sein.

Nachdem das externe Triggersignal in dem optischen Sensor 4 eingegeben wurde, wird mit dem optischen Sensor 4 die Umgebungskontur mit der Anlage 2 und den Gegenständen 7, 8 erfasst.

Die Schutzfeld-Grenze wird im Bereich der Gegenstände 7, 8 und der Anlage 2 durch die Distanzwerte bestimmt, die bei der Detektion dieser Objekte in den entsprechenden Winkelsegmenten 5a des Überwachungsbereichs 5 erhalten werden.

Alternativ kann von diesen Distanzwerten ein Offsetwert abgezogen werden, um so die Schutzfeld-Grenze zu definieren. Der Offsetwert kann eine Konstante sein oder durch eine Rechenoperation für die einzelnen Winkelsegmente 5a bestimmt sein.

In den Bereichen des Überwachungsbereichs 5, in welchen kein Objekt detektiert wird, wird der maximale Schutzfeld-Radius 21 als Schutzfeld-Grenze übernommen.

Das so generierte Schutzfeld 6 kann unmittelbar für die nachfolgende Schutzfeld-Überwachung mit dem optischen Sensor 4 übernommen werden. Alternativ kann das Schutzfeld 6 unter einer eindeutigen Nummer abgespeichert werden. Dazu kann das Schutzfeld 6 zu einem späteren Zeitpunkt unter dieser Nummer abgerufen und aktiviert werden.

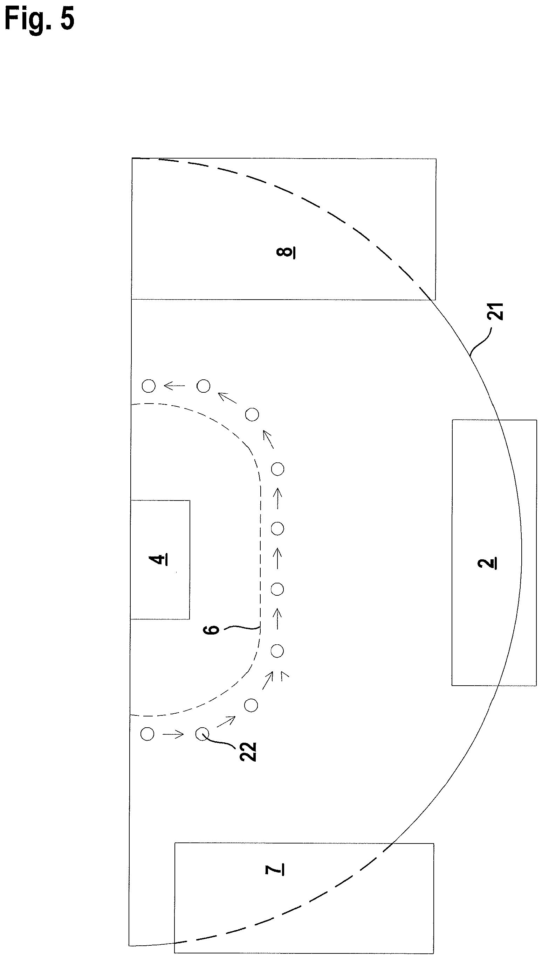

Figur 5 zeigt eine Variante der Schutzfeld-Generierung, wobei die Anordnung von Figur 5 im Wesentlichen der Anordnung gemäß Figur 4 entspricht.

In diesem Fall wird bei Registrieren des externen Triggersignals ein Zeitintervall gestartet, wobei innerhalb des Zeitintervalls ermittelte Umgebungskonturen zur Generierung eines Schutzfeldes 6 herangezogen werden.

Dabei werden innerhalb des Zeitintervalls für jedes Winkelsegment 5a des Überwachungsbereichs 5 fortlaufend Distanzwerte ermittelt. Nach Ablauf des Zeitintervalls wird für jedes Winkelsegment 5a der kleinste Distanzwert zur Generierung des Schutzfeldes herangezogen.

Bei dieser Variante kann innerhalb des Zeitintervalls eine Person mit einem Referenzobjekt 22 die gewünschte Schutzfeld-Grenze abschreiten, wodurch ein entsprechendes Schutzfeld 6 generiert wird, da die Distanzwerte des Referenzobjekts 22 für jedes Winkelsegment 5a jeweils den kleinsten Distanzwert innerhalb des Zeitintervalls generieren.

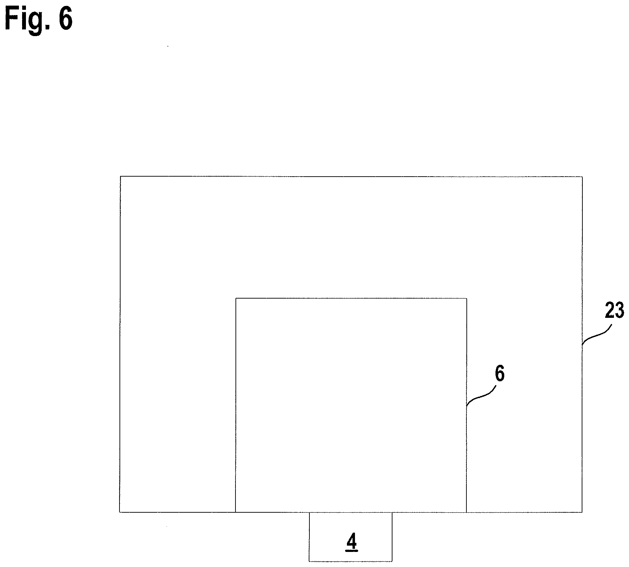

Figur 6 zeigt einen optischen Sensor 4, dem neben einem Schutzfeld 6 ein Warnfeld 23 zugeordnet ist. Auch im Warnfeld 23 erfolgt eine Detektion von Objekten mit dem optischen Sensor 4, vorzugsweise derart, dass Positionen, Geschwindigkeiten und/oder Bewegungsrichtungen von Objekten erfasst werden. Dadurch können gefahrbringende Objekte im Vorfeld erfasst werden, bevor sie in das Schutzfeld 6 eindringen, wodurch eine weitere Sicherheitsfunktion bereitgestellt wird.

Das Warnfeld 23 kann analog zum Schutzfeld 6 in Abhängigkeit eines externen Triggersignals generiert werden.

Vorteilhaft ist dem optischen Sensor 4 eine Eingabeeinheit zugeordnet, über welche eine Bedienperson auswählen kann, ob ein Schutzfeld 6 oder ein Warnfeld 23 generiert werden soll, wenn ein externes Triggersignal eingelesen wird.

Alternativ überträgt die Sicherheitssteuerung 3 zusammen mit dem oder vor/nach dem Triggersignal, ob ein Schutzfeld oder ein Warnfeld generiert werden soll.

### Bezugszeichenliste

- (1): Überwachungsvorrichtung
- (2): Anlage
- (3): Sicherheitssteuerung
- (4): Optischer Sensor
- (5): Überwachungsbereich
- (5a): Winkelsegment
- (6): Schutzfeld
- (7): Gegenstand
- (8): Gegenstand
- (9): Schnittstelle
- (10): Sende-/Empfangseinheit
- (11): Lichtstrahl
- (12): Sender
- (13): Empfänger
- (14): Empfangsoptik
- (15): Gehäuse
- (16): Ablenkeinheit
- (17): Umlenkspiegel
- (18): Messkopf
- (19): Sockel
- (20): Teilbereich
- (21): Maximaler Schutzfeld-Radius
- (22): Referenzobjekt
- (23): Warnfeld

- (D): Drehachse

## Patentansprüche

1. Überwachungsvorrichtung (1) mit einem optischen Sensor (4), welcher eine Sende-/Empfangseinheit (10) mit wenigstens einem Lichtstrahlen (11) emittierenden Sender (12) und wenigstens einem Lichtstrahlen (11) empfangenden Empfänger (13) aufweist, wobei die Lichtstrahlen (11) innerhalb eines Überwachungsbereichs (5) geführt sind, und mit einer Auswerteeinheit, in welcher wenigstens ein Schutzfeld (6) vorgegeben ist, wobei in der Auswerteeinheit in Abhängigkeit von Empfangssignalen des Empfängers (13) Objekte innerhalb des Schutzfeldes (6) erfasst werden, **dadurch gekennzeichnet, dass** in den optischen Sensor (4) ein externes Triggersignal einlesbar ist, wodurch in der Auswerteeinheit in Abhängigkeit wenigstens einer mit der Sende-/Empfangseinheit (10) erfassten Umgebungskontur ein Schutzfeld (6) generiert wird, dass der Überwachungsbereich (5) einen vorgegebenen Winkelbereich umfasst, der in eine Anzahl von Winkel segmenten (5a) unterteilt ist, wobei innerhalb jedes Winkelsegments (5a) wenigstens ein Distanzwert ermittelt wird.

2. Überwachungsvorrichtung (1) nach Anspruch 1, **dadurch gekennzeichnet, dass** der optische Sensor (4) ein Flächendistanzsensor ist, wobei mit dem optischen Sensor (4) Distanzwerte abhängig von der aktuellen Strahlrichtung der Lichtstrahlen (11) generiert werden.

3. Überwachungsvorrichtung (1) nach einem der Ansprüche 1 oder 2, **dadurch gekennzeichnet, dass** die Sende-/Empfangseinheit (10) des optischen Sensors (4) in einem rotierenden Messkopf (18) integriert ist, oder dass die Lichtstrahlen (11) der stationär angeordneten Sende-/Empfangseinheit (10) über eine rotierende Ablenkeinheit (16) als Bestandteil des optischen Sensors (4) geführt sind, wodurch die Lichtstrahlen (11) periodisch innerhalb des Überwachungsbereichs (5) geführt sind.

4. Überwachungsvorrichtung (1) nach einem der Ansprüche 1 - 3, **dadurch gekennzeichnet, dass** für Umgebungskonturen, die zur Generierung eines Schutzfeldes (6) herangezogen werden, Distanzwerte in den einzelnen Winkelsegmenten (5a) die Grenzen des Schutzfeldes (6) bilden.

5. Überwachungsvorrichtung (1) nach einem der Ansprüche 1 - 3, **dadurch gekennzeichnet, dass** für Umgebungskonturen, die zur Generierung eines Schutzfeldes (6) herangezogen werden, Distanzwerte in den einzelnen Winkelsegmenten (5a) zur Definition von Schutzfeld-Grenzen mit Offsetwerten verrechnet werden.

6. Überwachungsvorrichtung (1) nach einem der Ansprüche 1 - 5, **dadurch gekennzeichnet, dass** bei Registrieren des externen Triggersignals aus der aktuell ermittelten Umgebungskontur ein Schutzfeld (6) generiert wird.

7. Überwachungsvorrichtung (1) nach einem der Ansprüche 1 - 5, **dadurch gekennzeichnet, dass** bei Registrieren des externen Triggersignals ein Zeitintervall gestartet wird, wobei innerhalb des Zeitintervalls ermittelte Umgebungskonturen zur Generierung eines Schutzfeldes (6) herangezogen werden.

8. Überwachungsvorrichtung (1) nach Anspruch 7, **dadurch gekennzeichnet, dass** innerhalb des Zeitintervalls für jedes Winkelsegment (5a) des Überwachungsbereichs (5) fortlaufend Distanzwerte ermittelt werden, und dass nach Ablauf des Zeitintervalls für jedes Winkelsegment (5a) der kleinste Distanzwert zur Generierung des Schutzfeldes (6) herangezogen wird.

9. Überwachungsvorrichtung (1) nach einem der Ansprüche 1 - 8, **dadurch gekennzeichnet, dass** zur Definition von Schutzfeld-Grenzen in der Auswerteeinheit ein maximaler Schutzfeld-Radius (21) vorgegeben ist.

10. Überwachungsvorrichtung (1) nach einem der Ansprüche 1 - 9, **dadurch gekennzeichnet, dass** zur Definition von Schutzfeld-Grenzen Positionen wenigstens einer Gefahrenquelle in der Auswerteeinheit vorgegeben sind.

11. Überwachungsvorrichtung (1) nach einem der Ansprüche 1 - 10, **dadurch gekennzeichnet, dass** ein generiertes Schutzfeld (6) unmittelbar für Objektdetektionen aktiviert ist oder für eine spätere Aktivierung in der Auswerteeinheit gespeichert ist.

12. Überwachungsvorrichtung (1) nach einem der Ansprüche 1 - 11, **dadurch gekennzeichnet, dass** zusätzlich zu wenigstens einem Schutzfeld (6) wenigstens ein Warnfeld (23) bei Einlesen eines externen Triggersignals in den optischen Sensor (4) generiert wird.

13. Überwachungsvorrichtung (1) nach Anspruch 12, **dadurch gekennzeichnet, dass** eine Eingabeeinheit vorgesehen ist, über welche vorgebbar ist, ob ein Schutzfeld (6) oder ein Warnfeld (23) generiert wird.

14. Überwachungsvorrichtung (1) nach einem der Ansprüche 1 - 13, **dadurch gekennzeichnet, dass** der optische Sensor (4) ein Sicherheitssensor ist, welcher eine sichere Schnittstelle (9) zum Einlesen des externen Triggersignals aufweist.

15. Überwachungsvorrichtung (1) nach einem der Ansprüche 1 - 14, **dadurch gekennzeichnet, dass** in dem optischen Sensor (4) binäre Objektfeststellungsignale generiert werden, deren Schaltzustände angeben, ob sich ein Objekt im Schutzfeld (6) befindet oder nicht.

16. Überwachungsvorrichtung (1) nach einem der Ansprüche 1 - 15, **dadurch gekennzeichnet, dass** das externe Triggersignal von einer Sicherheitssteuerung (3) eingelesen wird.

17. Überwachungsvorrichtung (1) nach Anspruch 16, **dadurch gekennzeichnet, dass** der maximale Schutzfeldradius von der Sicherheitssteuerung (3) eingelesen wird.

18. Überwachungsvorrichtung (1) nach Anspruch 16 oder 17, **dadurch gekennzeichnet, dass** die Auswahl ob ein Schutzfeld oder ein Warnfeld generiert wird, von der Sicherheitssteuerung (3) eingelesen wird.

## Claims

1. A monitoring device (1) with an optical sensor (4) which has a transmitting/ receiving unit (10) with at least one transmitter (12) emitting light beams (11) and at least one receiver (13) receiving light beams (11), wherein the light beams (11) are guided within a monitoring area (5), and with an evaluation unit in which at least one protective field (6) is predetermined, wherein objects within the protective field (6) are detected in the evaluation unit in dependence on reception signals of the receiver (13), **characterised in that** an external trigger signal can be read into the optical sensor (4), whereby a protective field (6) is generated in the evaluation unit as a function of at least one environmental contour detected by the transmitting/receiving unit (10), **in that** the monitoring range (5) comprises a predetermined angular range which is subdivided into a number of angular segments (5a), at least one distance value being determined within each angular segment (5a).

2. A monitoring device (1) according to claim 1, **characterised in that** the optical sensor (4) is a surface distance sensor, wherein distance values are generated with the optical sensor (4) depending on the current beam direction of the light beams (11).

3. A monitoring device (1) according to one of claims 1 or 2, **characterised in that** the transmitting/receiving unit (10) of the optical sensor (4) is integrated in a rotating measuring head (18), or **in that** the light beams (11) of the stationary transmitting/receiving unit (10) are guided via a rotating deflecting unit (16) as a component of the optical sensor (4), whereby the light beams (11) are guided periodically within the monitoring area (5).

4. A monitoring device (1) according to one of the claims 1-3, **characterised in that** distance values in the individual angular segments (5a) form the boundaries of the protective field (6) for surrounding contours which are used to generate a protective field (6).

5. A monitoring device (1) according to one of the claims 1-3, **characterised in that** distance values in the individual angular segments (5a) are calculated with offset values for the definition of protective field boundaries for surrounding contours which are used to generate a protective field (6).

6. A monitoring device (1) according to one of the claims 1-5, **characterised in that** a protective field (6) is generated from the currently determined surrounding contour when the external trigger signal is registered.

7. A monitoring device (1) according to one of the claims 1-5, **characterised in that** when the external trigger signal is registered, a time interval is started, whereby surrounding contours determined within the time interval are used to generate a protective field (6).

8. A monitoring device (1) according to claim 7, **characterised in that** distance values are continuously determined within the time interval for each angular segment (5a) of the monitoring area (5), and **in that** after the time interval for each angular segment (5a) has elapsed, the smallest distance value is used to generate the protective field (6).

9. A monitoring device (1) according to one of the claims 1-8, **characterised in that** a maximum protective field radius (21) is predetermined for the definition of protective field limits in the evaluation unit.

10. A monitoring device (1) according to one of the claims 1-9, **characterised in that** positions of at least one hazard source are predefined in the evaluation unit for the definition of protective field limits.

11. A monitoring device (1) according to one of the claims 1-10, **characterised in that** a generated protective field (6) is immediately activated for object detections or is stored in the evaluation unit for later activation.

12. A monitoring device (1) according to one of the claims 1-11, **characterised in that**, in addition to at least one protective field (6), at least one warning field (23) is generated when an external trigger signal is read into the optical sensor (4).

13. A monitoring device (1) according to claim 12, **characterised in that** an input unit is provided via which it is possible to specify whether a protective field (6) or a warning field (23) is generated.

14. A monitoring device (1) according to one of the claims 1-13, **characterised in that** the optical sensor (4) is a safety sensor which has a safe interface (9) for reading in the external trigger signal.

15. A monitoring device (1) according to one of the claims 1-14, **characterised in that** binary object detection signals are generated in the optical sensor (4), the switching states of which indicate whether an object is located in the protective field (6) or not.

16. A monitoring device (1) according to one of the claims 1-15, **characterised in that** the external trigger signal is read in by a safety control (3).

17. A monitoring device (1) according to claim 16, **characterised in that** the maximum protective field radius is read in by the safety controller (3).

18. A monitoring device (1) according to claim 16 or 17, **characterised in that** the selection of whether a protective field or a warning field is generated is read in by the safety controller (3).

## Revendications

1. Dispositif de surveillance (1) muni d'un capteur optique (4) qui présente une unité d'émission/réception (10) avec au moins un émetteur (12) émettant des rayons lumineux (11) et au moins un récepteur (13) recevant des rayons lumineux (11), les rayons lumineux (11) étant guidés à l'intérieur d'une zone de surveillance (5), et avec une unité d'évaluation dans laquelle au moins un champ de protection (6) est prédéterminé, des objets à l'intérieur du champ de protection (6) étant détectés dans l'unité d'évaluation en fonction de signaux de réception du récepteur (13), **caractérisé en ce qu'**un signal de déclenchement externe peut être lu dans le capteur optique (4), un champ de protection (6) étant généré dans l'unité d'évaluation en fonction d'au moins un contour environnant détecté par l'unité d'émission/réception (10), **en ce que** la zone de surveillance (5) comprend une plage angulaire prédéterminée qui est divisée en plusieurs segments angulaires (5a), au moins une valeur de distance étant déterminée à l'intérieur de chaque segment angulaire (5a).

2. Dispositif de surveillance (1) selon la revendication 1, **caractérisé en ce que** le capteur optique (4) est un capteur de distance de surface, des valeurs de distance étant générées avec le capteur optique (4) en fonction de la direction actuelle des faisceaux lumineux (11).

3. Dispositif de surveillance (1) selon l'une des revendications 1 ou 2, **caractérisé en ce que** l'unité d'émission/réception (10) du capteur optique (4) est intégrée dans une tête de mesure rotative (18), ou **en ce que** les rayons lumineux (11) de l'unité d'émission/réception fixe (10) sont guidés par une unité de déviation rotative (16) en tant que composant du capteur optique (4), les rayons lumineux (11) étant guidés périodiquement dans la zone de surveillance (5).

4. Dispositif de surveillance (1) selon l'une des revendications 1 à 3, **caractérisé en ce que** les valeurs de distance dans les différents segments angulaires (5a) forment les limites du champ de protection (6) pour les contours environnants qui sont utilisés pour générer un champ de protection (6).

5. Dispositif de surveillance (1) selon l'une des revendications 1 à 3, **caractérisé en ce que** les valeurs de distance dans les segments angulaires individuels (5a) sont calculées avec des valeurs de décalage pour la définition des limites du champ de protection pour les contours environnants qui sont utilisés pour générer un champ de protection (6).

6. Dispositif de surveillance (1) selon l'une des revendications 1-5, **caractérisé en ce qu'**un champ de protection (6) est généré à partir du contour environnant actuellement déterminé lorsque le signal de déclenchement externe est enregistré.

7. Dispositif de surveillance (1) selon l'une des revendications 1-5, **caractérisé en ce que** lorsque le signal de déclenchement externe est enregistré, un intervalle de temps est démarré, les contours environnants déterminés dans l'intervalle de temps étant utilisés pour générer un champ de protection (6).

8. Dispositif de surveillance (1) selon la revendication 7, **caractérisé en ce que** des valeurs de distance sont déterminées en continu dans l'intervalle de temps pour chaque segment angulaire (5a) de la zone de surveillance (5), et **en ce qu'**après l'écoulement de l'intervalle de temps pour chaque segment angulaire (5a), la plus petite valeur de distance est utilisée pour générer le champ de protection (6).

9. Dispositif de surveillance (1) selon l'une des revendications 1 à 8, **caractérisé en ce qu'**un rayon maximal du champ de protection (21) est prédéterminé pour la définition des limites du champ de protection dans l'unité d'évaluation.

10. Dispositif de surveillance (1) selon l'une des revendications 1-9, **caractérisé en ce que** des positions d'au moins une source de danger sont prédéfinies dans l'unité d'évaluation pour la définition des limites du champ de protection.

11. Dispositif de surveillance (1) selon l'une des revendications 1-10, **caractérisé en ce qu'**un champ de protection généré (6) est immédiatement activé pour des détections d'objets ou est stocké dans l'unité d'évaluation pour une activation ultérieure.

12. Dispositif de surveillance (1) selon l'une des revendications 1-11, **caractérisé en ce que**, en plus d'au moins un champ de protection (6), au moins un champ d'alerte (23) est généré lorsqu'un signal de déclenchement externe est lu dans le capteur optique (4).

13. Dispositif de surveillance (1) selon la revendication 12, **caractérisé en ce qu'**il est prévu une unité d'entrée par laquelle il est possible d'indiquer si un champ de protection (6) ou un champ d'alerte (23) est généré.

14. Dispositif de surveillance (1) selon l'une des revendications 1-13, **caractérisé en ce que** le capteur optique (4) est un capteur de sécurité qui présente une interface de sécurité (9) pour la lecture du signal de déclenchement externe.

15. Dispositif de surveillance (1) selon l'une des revendications 1-14, **caractérisé en ce que** des signaux binaires de détection d'objet sont générés dans le capteur optique (4), dont les états de commutation indiquent si un objet se trouve dans le champ de protection (6) ou non.

16. Dispositif de surveillance (1) selon l'une des revendications 1-15, **caractérisé en ce que** le signal de déclenchement externe est lu par une commande de sécurité (3).

17. Dispositif de surveillance (1) selon la revendication 16, **caractérisé en ce que** le rayon maximal du champ de protection est lu par la commande de sécurité (3).

18. Dispositif de surveillance (1) selon la revendication 16 ou 17, **caractérisé en ce que** la sélection de la génération d'un champ de protection ou d'un champ d'alerte est lue par le dispositif de commande de sécurité (3).
